# EUROPEAN PATENT SPECIFICATION

(11) **EP 0 788 905 B1**
(45) Date of publication and mention of the grant of the patent: **16.07.2003**
(21) Application number: 96115746.8
(22) Date of filing: 01.10.1996
(51) Int. Cl.: B60H 1/00

(54) **Heater/cooler unit of automotive air conditioning system**
Heiz-/Kühlungseinheiteiner Kraftfahrzeug-Klimaanlage
Unité de chauffage/refroidissement d'un système de conditionnement d'air de véhicule

(30) Priority: 02.10.1995 JP 25490195
(43) Date of publication of application: 13.08.1997
(73) Proprietor: Calsonic Kansei Corporation, Tokyo (JP)
(72) Inventor: Sano, Masahiro, c/o Calsonic Corp., Tokyo 164 (JP); Sasaki, Hiroaki, c/o Nissan Motor Co., Ltd., Yokohama-shi, Kanagawa 221 (JP); Nakazawa, Yukio, c/o Nissan Motor Co., Ltd., Yokohama-shi, Kanagawa 221 (JP); Shibuya, Naoharu, c/o Nissan Motor Co., Ltd., Yokohama-shi, Kanagawa 221 (JP)
(74) Representative: Grünecker, Kinkeldey, Stockmair & Schwanhäusser Anwaltssozietät

(56) References cited:
- DE-A- 3 542 626
- GB-A- 884 918
- GB-A- 1 361 188
- GB-A- 1 539 902
- US-A- 4 383 642

## Description

The present invention relates to a heater/cooler unit of an automotive air conditioning system according to the preamble of independent claim 1 and a heater/cooler unit of an automotive air conditioning system according to the preamble of independent claim 12.

In general, a heater/cooler unit of an automotive air conditioning system comprises three major parts, which are an air intake part for selectively taking in outside air and/or inside air, a cooler part for cooling the air from the air intake part and a heater part for heating the air from the cooler part. In operation, the air flowing from the air intake part is forced to make a heat exchange with the cooler and heater parts and thus conditioned.
The heater/cooler unit is formed at a downstream portion thereof with a plurality of air outlet openings from which the conditioned air is led to various given areas of a passenger room through respective ducts.

Hitherto, in view of the tendency of downsizing the vehicles, various attempts have been made for reducing the size of the heater/cooler unit, one of which is shown in Japanese Utility Model First Provisional Publication 57-202311.

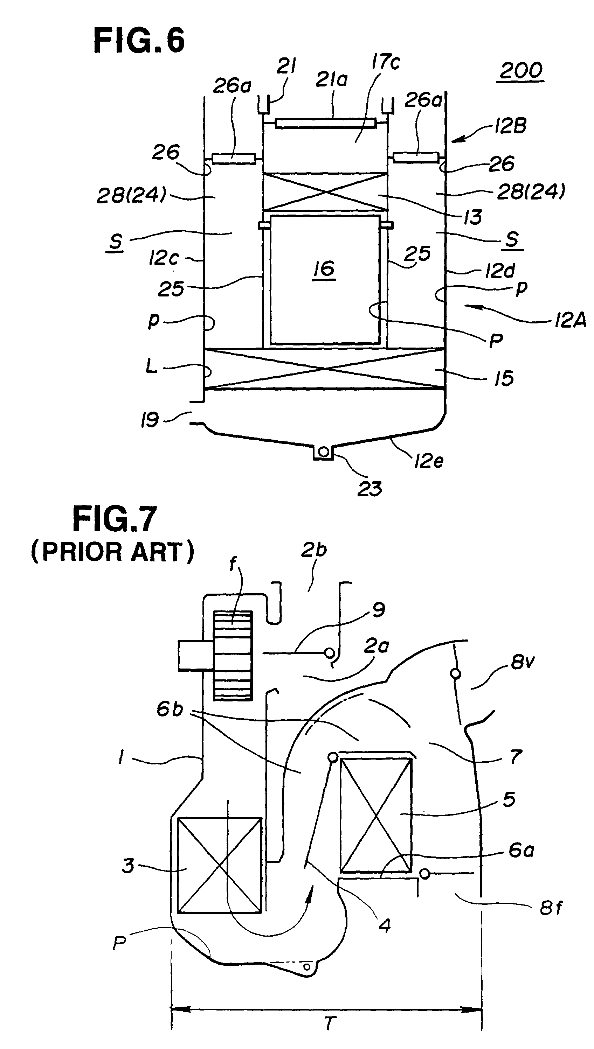

For clarifying the task of the present invention, a heater/cooler unit disclosed by the Publication will be outlined with reference to Fig. 7 of the accompanying drawings.

As shown in the drawing, the heater/cooler unit comprises an integral casing 1 in which a generally U-shaped air flow passage "P" is defined by curved walls. At an upstream portion of the passage "P", there is installed an electric fan "f" for taking in outside and/or inside air. An outside air inlet opening "2b" and an inside air inlet opening "2a" are exposed to the upstream portion of the passage "P" with an air intake door 9 arranged therebetween. At a portion just upstream of the lowermost portion of the U-shaped passage "P", there is installed an evaporator 3 by which the air from the electric fan "f" is cooled. As shown, a downstream portion of the U-shaped passage "P" with respect to the lowermost portion of the same is enlarged and has a heater core 5 installed therein. At a terminal end portion of the passage "P", there is defined an air mix chamber 7. Due to presence of the heater core 5, the enlarged downstream portion of the passage "P" defines two shorter air flow passages 6a and 6b, one being an air heating passage 6a including the heater core 5 and the other being a bypass passage 6b bypassing the heater core 5. As shown, these two shorter passages 6a and 6b have downstream ends merged with the air mix chamber 7. An air mix door 4 is arranged to control the rate between the amount of air directed to the passage 6a and the amount of air directed to the other passage 6b. A ventilation opening 8v and a foot space opening 8f are exposed to the air mix chamber 7. That is, in operation, conditioned air in the air mix chamber 7 is led to given areas of the passenger room through the ventilation and foot space openings 8v and 8f.

Due to usage of the generally U-shaped air flow passage "P", the cooler/heater unit can be fairly reduced in size. However, as is understood from the drawing, the arrangement of placing the air flow passage "P" between the evaporator 3 and the heater core 4 has failed to obtain a satisfied compactness of the cooler/heater unit. In fact, due to such arrangement, the thickness "T" of the unit increases by a non-negligible degree.

In order to solve this drawback, a measure may be thought out in which the evaporator 3 and the heater core 5 are vertically aligned in the upstream part of the U-shaped air flow passage "P" for reduction of the thickness "T". However, this measure tends to induce another drawback wherein due to inevitable size-difference of the evaporator 3 and the heater core 5, the passage containing these devices 3 and 5 is forced to have a complicated structure. Usually, the evaporator 3 is larger than the heater core 5. As is known, providing the cooler/heater unit with such a complicated structure causes a creation of useless space or dead space around the unit upon assembly in the vehicle.

It is an objective of the present invention to provide a heater/cooler unit of an automotive air conditioning system as indicated above, respectively, which is compact in size.

According to a first aspect of the present invention, said objective is solved by a heater/cooler unit of an automotive air conditioning system having the features of independent claim 1.

According to a second aspect of the present invention, said objective is also solved by a heater/cooler unit of an automotive air conditioning system having the features of independent claim 9.

Preferred embodiments are laid down in the respective dependent claims.

Accordingly, there is provided a heater/cooler unit which is produced compact in size by effectively using the spaces which would be inevitably produced when the unit contains an evaporator and a heater core which are different in size.

Accordingly, there is provided a heater/cooler unit of an automotive air conditioning system. The unit comprises a casing having air inlet and outlet openings which are connected through an air flow passage defined by the casing, the casing including an enlarged portion and a reduced portion by which an enlarged part and a reduced part of the air flow passage are defined respectively, the casing thus having a concave contour defined by the reduced portion thereof; an evaporator installed in the enlarged part of the air flow passage; a heater unit which is smaller in size than the evaporator, the heater unit being installed in the reduced part of the air flow passage; and at least one duct snugly extending along the concave contour of the casing, the duct having one end connected to a downstream portion of the air flow passage.

According to an embodiment, there is provided a heater/cooler unit of an automotive air conditioning system. The unit comprises a casing including a body portion and a head portion which are integrally molded, the body portion including an enlarged lower part and a reduced upper part which are connected through a smoothly curved intermediate part, the casing thus forming at both sides of the reduced upper part concave outer surface portions thereof, the head portion defining therein an air mix chamber which is communicated with the interior of the reduced upper part; an evaporator installed in the enlarged lower part of the casing; a heater core which is smaller in size than the evaporator, the heater core being spacedly installed in the reduced upper part of the casing; an air mix door arranged between the evaporator and the heater core to control the rate between the amount of air which travels the heater core before reaching said air mix chamber and the amount of air which directly reaches the air mix chamber without traveling the heater core; and two ducts received on and extending along the concave outer surface portions of the casing respectively, each duct having one end connected to the air mix chamber.

Furthermore, there is provided a heater/cooler unit of an automotive air conditioning system. The unit comprises a casing including a body portion and a head portion which are integrally molded, the body portion a center body part having a reversed T-shaped cross section and a thinner side body part attached to the center body part with a partition wall interposed therebetween, the center body part and the thinner side body part having respective upstream ends connected as well as respective downstream ends connected, the casing forming at both sides of the center body part outer surface portions thereof which extend along the thinner side body part, the head portion defining therein an air mix chamber which is communicated with both the downstream ends of the center body part and the thinner side body part; an evaporator installed in an enlarged lower part of the center body part of the body portion; a heater core which is smaller in size than the evaporator, the heater core being spacedly installed in a reduced upper part of the center body part; an air mix door arranged between the evaporator and the heater core to control the rate between the amount of air which travels the heater core before reaching the air mix chamber and the amount of air which directly reaches the air mix chamber without traveling the heater core; and two ducts received on and extending along the concave outer surface portions of the casing, each duct having one end connected to the air mix chamber.

Hereinafter, the present invention is illustrated and explained by means of preferred embodiments in conjunction with the accompanying drawings. In the drawings, wherein:
Fig. 1 is a vertically sectional view of a heater/cooler unit which is a first embodiment
Fig. 2 is a top view of the unit taken from the direction of the line II-II of Fig. 1;
Fig. 3 is a sectional view taken along the line III-III of Fig. 1;
Fig. 4 is a vertically sectional view of a heater/cooler unit which is a second embodiment;
Fig. 5 is a top view of the unit of the second embodiment taken from the direction of the line V-V of Fig. 4;
Fig. 6 is a sectional view taken along the line VI-VI of Fig. 4; and
Fig. 7 is a schematically illustrated vertically sectional view of a conventional heater/cooler unit.

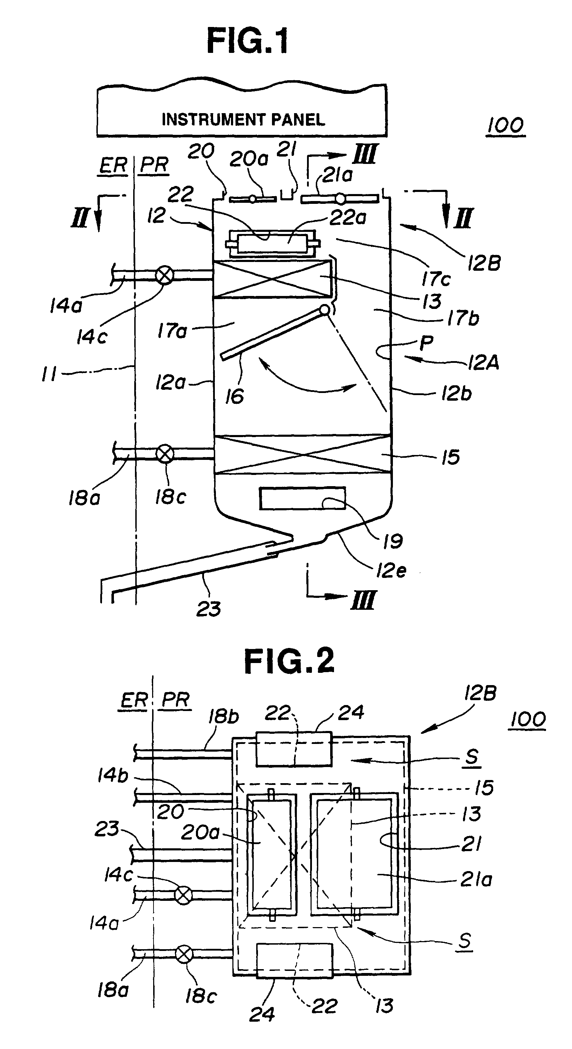

Referring to Figs. 1 to 3, particularly Fig. 1, there is shown a heater/cooler unit 100 of a first embodiment.

As will be understood from Fig. 1, the heater/cooler unit 100 is placed under an instrument panel which is positioned near a dash panel 11 by which an engine room ER and a passenger room PR are bounded.

The heater/cooler unit 100 comprises an integral casing 12 located under the instrument panel. As will become apparent as the description proceeds, the unit 100 is arranged and constructed to flow air upward in the casing 12 from a lower portion toward an upper portion.

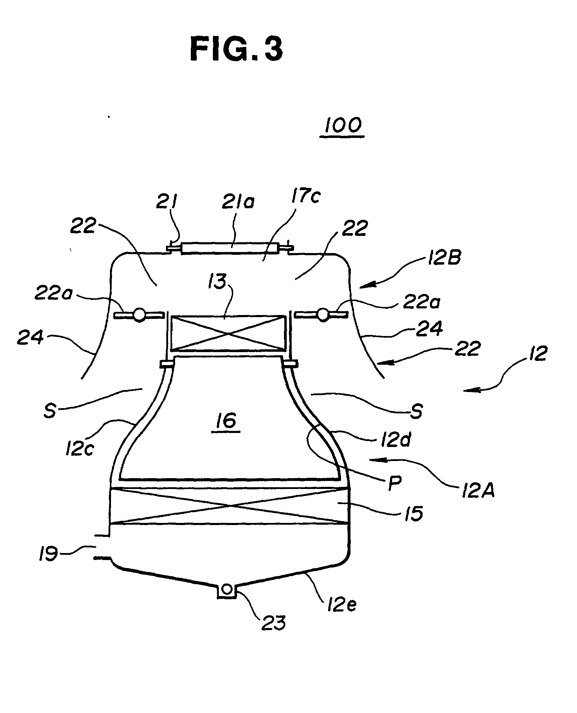

As is understood from Figs. 1 and 3, the casing 12 is of a molded plastic and comprises generally a body portion 12A and a head portion 12B which are integrally molded. As shown in Fig. 3, the body portion 12A has a generally trapezoidal cross section when cut vertically, while the head portion 12B has a generally reversed U-shaped cross section. As will be described in detail hereinafter, within the head portion 12B, there is defined an air mix chamber 17c from which conditioned air is led to various given portions of the passenger room.

The body portion 12A of the casing 12 comprises front and rear parallel flat walls 12a and 12b (see Fig. 1), right and left smoothly curved walls 12c and 12d (see Fig. 3) and a bottom wall 12e which are combined to constitute a bulbous body as will be understood from Fig. 3. That is, the body portion 12A has an enlarged lower part and a reduced upper part which are connected through a smoothly curved intermediate part. More specifically, the sectional area of the body portion 12A gradually reduces as the distance from the bottom increases. The reduced upper part of the body portion 12A has an apertured top.

The head portion 12B has an apertured lower portion mated with the apertured top of the reduced upper part of the body portion 12A. Thus, there is provided a fluid communication between the interior of the head portion 12B and that of the body portion 12A.

Within the body portion 12A of the casing 12, there are installed a heater core 13 and an evaporator 15 which are spaced in a vertical direction. That is, as is seen from Figs. 1 and 3, the heater core 13 which is smaller in size is spacedly installed in the reduced upper part of the body portion 12A, while the evaporator 15 which is larger in size is snugly installed in the enlarged lower part of the body portion 12A.

As is seen from Fig. 1, behind the heater core 13 in the body portion 12A, there is defined an air flow space which serves as a bypass passage 17b as will be described hereinafter.

As is understood from Figs. 1 and 2, to the heater core 13, there are connected both a water inlet pipe 14a and a water outlet pipe 14b for feeding the heater core 13 with an engine cooling water. The water inlet pipe 14a has a control valve 14c connected thereto. To the evaporator 15, there are connected both a refrigerant inlet pipe 18a and a refrigerant outlet pipe 18b for feeding the evaporator 15 with a refrigerant from a compressor (not shown) of the air cooling system. The refrigerant inlet pipe 18a has an expansion valve 18c connected thereto.

In the body portion 12A of the casing 12, there is defined a straight air flow passage "P" which extends upward from the lowermost part of the body portion 12A to the uppermost part of the same through the evaporator 15.

Due to presence of the heater core 13 in the passage "P", there are defined at the upper part of the body portion 12A two shorter air flow passages 17a and 17b, one being an air heating passage 17a including the heater core 13 and the other being a bypass passage 17b bypassing the heater core 13. These two shorter air flow passages 17a and 17b have downstream ends merged with the air mix chamber 17c defined in the head portion 12B of the casing 12.

Between the evaporator 15 and the heater core 13, there is pivotally arranged an air mix door 16 which controls the rate between the amount of air directed to the air heating passage 17a and that directed to the bypass passage 17b. As will be seen from Fig. 3, the air mix door 16 is shaped like a spatula for matching with the interior shape of the smoothly curved intermediate part of the body portion 12A.

The lowermost part of the body portion 12A is formed with an air inlet opening 19 through which air from a known air intake unit (not shown) is introduced into the casing 12. The air intake unit may comprise a case which has an outside air inlet opening, an inside air inlet opening and an air outlet opening, an air intake door which controls the rate of open degree between the outside air inlet opening and the inside air inlet opening, and an electric fan which drives air in the case toward the air inlet opening 19 of the heater/cooler unit 12 through the air outlet opening.

Thus, under operation of the electric fan of the air intake unit, air is forced to flow from the air intake unit into the body portion 12A of the casing 12 through the air inlet opening 19. The air thus led into the casing 12 is forced to travel upward through the evaporator 15 and one or both of the two shorter air flow passages 17a and 17b toward the air mix chamber 17c of the head portion 12B.

Designated by numeral 23 (see Figs. 1 and 3) is a drain pipe which extends from the lowermost part of the casing 12 to the outside. That is, condensed water dropped from the evaporator 15 is discharged to the outside through the drain pipe 23.

As will be understood from Figs. 1 and 2, the head portion 12B is formed at an upper wall thereof with both a defroster opening 20 and a ventilation opening 21. The defroster opening 20 is led through ducts (not shown) to defroster air blowing openings (not shown) directed to an inner surface of a windshield (not shown), and the ventilation opening 21 is led through ducts (not shown) to ventilation air blowing openings (not shown) directed to an upper portion of the passenger room. The defroster opening 20 and the ventilation opening 21 are provided with flow control doors 20a and 21a respectively.

As is best seen from Fig. 3, the head portion 12B is formed at opposed side portions thereof with respective foot space openings 22 which are led through respective ducts 24 to foot space air blowing openings (not shown) directed to a lower portion of the passenger room. Each duct 24 is provided near the foot space opening 22 with a flow control door 22a.

It is to be noted that the ducts 24 (see Fig. 3) extend downward along concave contours defined by the right and left curved side walls 12c and 12d of the body portion 12A of the casing 12. That is, in the first embodiment 100 spaces "S" which are inevitably provided by the body portion 12A of the casing 12 are effectively used for snugly receiving the ducts 24. In other words, the spaces "S" inevitably produced around the casing 12 when the latter contains therein the evaporator 15 and the heater core 13 which are different in size are effectively used for downsizing the heater/cooler unit 100. Thus, the heater/cooler unit 100 of the first embodiment can be produced compact in size.

In the following, various modes provided by the heater/cooler unit 100 will be described with reference to the drawings, particularly Fig. 1.

### VENTILATION MODE

In this mode, the flow control door 21a fully opens the ventilation opening 21 and the other flow control doors 20a and 22a shut off their corresponding openings 20 and 22. The air mix door 16 assumes an intermediate position wherein both the air heating passage 17a and the bypass passage 17b are partially opened. Thus, in this mode, air from the air intake unit (not shown) is led into the casing 12 through the air inlet opening 19 and forced to pass through the evaporator 15. The air thus cooled by the evaporator 15 is branched into two air flows by the air mix door 16, one being directed to the air heating passage 17a and the other being directed to the bypass passage 17b. The air thus heated when traveling through the air heating passage 17a and the cooled air thus not heated when traveling through the bypass passage 17b are mixed in the air mix chamber 17c and thus conditioned in temperature. Through the opened ventilation opening 21, the conditioned air in the air mix chamber 17c is led to the ventilation air blowing openings and blown to an upper portion of the passenger room.

### FOOT AREA WARMING MODE

In this mode, the flow control doors 22a fully open the foot space openings 22 and the other flow control doors 20a and 21a shut off their corresponding openings 20 and 21. The air mix door 16 assumes an intermediate position. However, in this mode, the air mix door 16 provides a larger opening for the air heating passage 17a as compared with that for the bypass passage 17b. Thus, the air collected in the air mix chamber 17c has a temperature higher than that in case of the above-mentioned VENTILATION MODE. Thus, through the opened foot space openings 22, warmed air is led to the foot space air blowing openings and blown therefrom to a lower portion of the passenger room.

### WINDSHIELD DEFROSTING MODE

In this mode, the flow control door 20a fully opens the defroster opening 20 and the other flow control doors 21a and 22a shut off their corresponding openings 21 and 22. The air mix door 16 assumes an intermediate position to provide the air mix chamber 17c with conditioned air. Through the opened defroster opening 20, the conditioned air in the air mix chamber 17c is led to the defroster air blowing openings and blown to the inner surface of the windshield to defrost the same.

As is described hereinabove, in the first embodiment, the spaces "S" which are inevitably provided by the casing 12 are effectively used for snugly receiving the ducts 24, which makes the heater/cooler unit 100 compact in size.

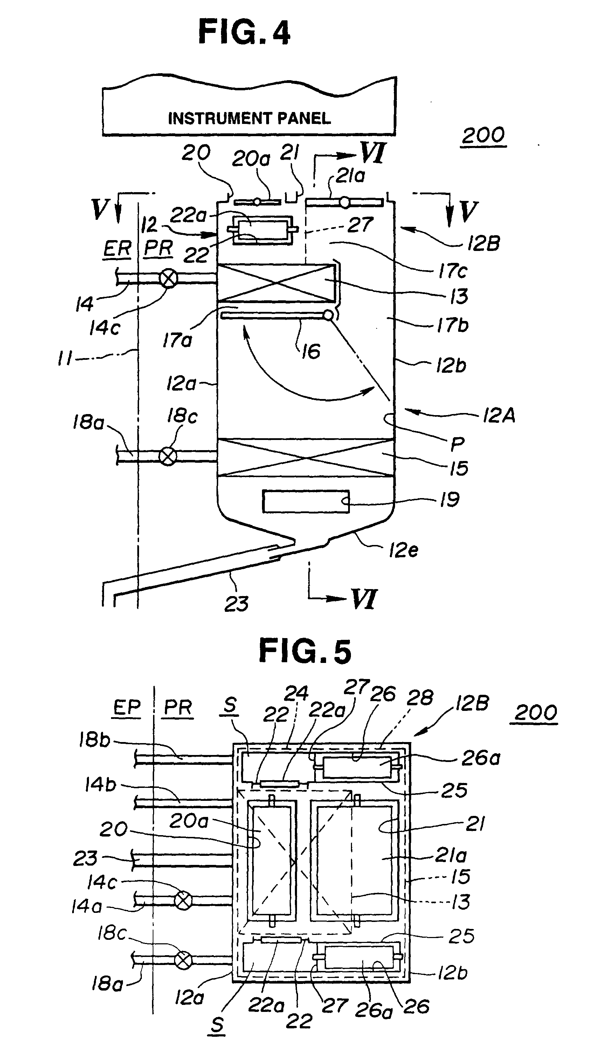

Referring to Figs. 4 to 6, particularly Fig. 4, there is shown a heater/cooler unit 200 of a second embodiment.

The heater/cooler unit 200 comprises an integral casing 12 located under the instrument panel. Similar to the above-mentioned first embodiment, the unit 200 is arranged and constructed to flow air upward in the casing 12 from a lower portion toward an upper portion.

As is understood from Figs. 4 and 6, the casing 12 is of a molded plastic and comprises generally a body portion 12A and a head portion 12B which are integrally molded. As shown, each of the body portion 12A and the head portion 12B has a rectangular cross section. As will be described in detail hereinafter, within the head portion 12B, there is defined an air mix chamber 17c from which conditioned air is led to various given portions of a passenger room.

The body portion 12A of the casing 12 comprises front and rear parallel flat walls 12a and 12b (see Fig. 4), right and left parallel flat walls 12c and 12d (see Fig. 6) and a bottom wall 12e which are combined to constitute a rectangular parallelepiped hollow structure.

As will be seen from the drawings, particularly from Figs. 5 and 6, within the body portion 12A, there are installed two spaced partition walls 25 which extend vertically. Each partition wall 25 has a lower end spaced from the bottom wall 12e thereby providing a larger rectangular parallelepiped space "L" at the lower part of the body portion 12A. Within the larger space "L", there is snugly received an evaporator 15 which is larger in size.

Due to presence of the partition walls 25 in the body portion 12A, there is defined therebetween a main air flow passage "P". Within the main air flow passage "P", there is spacedly received a heater core 13 which is smaller in size. Furthermore, due to presence of the partition walls 25, there are defined at both sides of the main air flow passage "P" two vertically extending spaces "p" each having a rectangular cross section. As is seen from Fig. 5, each space "p" has a vertically extending partition wall 27 by which the space "p" is divided into two air flow passages 24 and 28, one being a duct 24 for an after-mentioned foot space opening 22, and the other being a duct 28 for an after-mentioned fresh ventilation opening 26.

It is to be noted that the duct 24 for the foot space opening 22 has a closed bottom by which a fluid communication between the duct 24 and the larger space "L" is blocked, while, the duct 28 for the fresh ventilation opening 26 has an open bottom by which a fluid communication between the duct 28 and the larger space "L" is provided.

The head portion 12B has an apertured lower portion which is mounted on the body portion 12A in such a manner as to provide a fluid communication between the interior of the head portion 12 and that of the body portion 12A.

As is seen from Fig. 4, behind the heater core 13 in main air flow passage "P", there is defined an air flow space which serves as a bypass passage 17b as will be described in detail hereinafter.

As is understood from Figs. 4 and 5, to the heater core 13, there are connected both a water inlet pipe 14a and a water outlet pipe 14b for feeding the heater core 13 with an engine cooling water. The water inlet pipe 14a has a control valve 14c connected thereto. To the evaporator 15, there are connected both a refrigerant inlet pipe 18a and a refrigerant outlet pipe 18b for feeding the evaporator 15 with a refrigerant from a compressor (not shown). The refrigerant inlet pipe 18a has an expansion valve 18c connected thereto.

Due to presence of the heater core 13, there are defined at the upper part of the main air flow passage "P" two shorter air flow passages 17a and 17b, one being an air heating passage 17a including the heater core 13 and the other being a bypass passage 17b bypassing the heater core 13. These two shorter air flow passages 17a and 17b have downstream ends merged with the air mix chamber 17c defined in the head portion 12B of the casing 12.

It is to be noted that the above-mentioned ducts 28 (for the fresh ventilation openings 26) have downstream (or upper) ends connected to the air mix chamber 17c through the fresh ventilation openings 26 which are formed in a bottom wall of the head portion 12B. Each fresh ventilation opening 26 is provided with a flow control door 26a.

In the main air flow passage "P" at a position upstream of the heater core 13, there is pivotally arranged an air mix door 16 which controls the rate between the amount of air directed to the air heating passage 17a and that directed to the bypass passage 17b. As will be seen from Fig. 6, the air mix door 16 is rectangular in shape.

The lowermost part of the body portion 12A is formed with an air inlet opening 19 through which air from a known air intake unit (not shown) is introduced into the casing 12.

Thus, in operation, air led into the lowermost part of the body portion 12A through the air inlet opening 19 is forced to travel upward toward the air mix chamber 17c of the head portion 12B by taking three air flow passages independently, which are the main air flow passage "P" and the two fresh ventilation ducts 28.

More specifically, air directed toward the main air flow passage "P" is forced to travel the evaporator 15 and one or both of the two shorter air flow passages 17a and 17b before reaching the air mix chamber 17c, while air directed toward the fresh ventilation ducts 28 is forced to travel only the evaporator 15 before reaching the air mix chamber 17c.

Designated by numeral 23 is a drain pipe for discharging condensed water, which is dropped from the evaporator 15, to the outside of the casing 12.

As will be understood from Figs. 4 and 5, the head portion 12B is formed at an upper wall thereof with a defroster opening 20 and a ventilation opening 21. Each opening 20 or 21 is provided with a flow control door 20a and 21a. As is described in the section of the first embodiment 100, the defroster opening 20 is led through ducts (not shown) to defroster air blowing openings (not shown) directed to an inner surface of a windshield (not shown), and the ventilation opening 21 is led through ducts (not shown) to ventilation air blowing openings (not shown) directed to an upper portion of the passenger room.

As will be understood from Fig. 5, the head portion 12B is formed at opposed side portions thereof with respective foot space openings 22 to which upper ends of the above-mentioned ducts 24 are integrally connected respectively. The ducts 24 are led to foot space air blowing openings (not shown) directed to a lower portion of the passenger room. Each duct 24 is provided near the foot space opening 22 with a flow control door 22a.

It is to be noted that all the ducts 24 (see Fig. 6) for the foot space air blowing openings and all the ducts 28 for the fresh ventilation openings 26 extend snugly along the main air flow passage "P" which is shaped slim. More specifically, the ducts 24 extend downward along the main air flow passage "P", while the ducts 28 extend upward along the main air flow passage "P". That is, in the second embodiment 200, spaces "S" which are inevitably produced around the casing 12 when the latter contains therein the evaporator 15 and the heater core 13 which are different in size are effectively used for forming the ducts 24 and 28. Thus, the heater/cooler unit 200 of the second embodiment can be produced compact in size.

In the following, various modes provided by the heater/cooler unit 200 will be described with reference to the drawings, particularly Fig. 4.

### VENTILATION MODE

In this mode, the flow control door 21a fully opens the ventilation opening 21 and the flow control doors 20a and 22a shut off their corresponding openings 20 and 22. The air mix door 16 assumes an intermediate position to provide suitably conditioned air in the air mix chamber 17c. Through the opened ventilation opening 21, the conditioned air is led to the ventilation air blowing openings and blown to an upper portion of the passenger room. When the flow control doors 26a open the fresh ventilation openings 26, air cooled by the evaporator 15 is directly led to the air mix chamber 17c through the ducts 28. Thus, in this case, much cooled air is led to the passenger room through the ventilation air blowing openings.

### FOOT AREA WARMING MODE

In this mode, the flow control doors 22a fully open the foot space openings 22 and the other flow control doors 20a and 21a shut off their corresponding openings 20 and 21. Furthermore, the flow control doors 26a shut off the fresh ventilation openings 26. The air mix door 16 assumes a position to provide a larger opening for the air heating passage 17a as compared with that for the bypass passage 17b. Thus, through the opened foot space openings 22, warmed air is led to the foot space air blowing openings and blown therefrom to a lower portion of the passenger room.

### WINDSHIELD DEFROSTING MODE

In this mode, the flow control door 20a fully opens the defroster opening 20 and the other controls doors 21a, 22a and 26a shut off their corresponding openings 21, 22 and 26. The air mix door 16 assumes an intermediate position to provide the air mix chamber 17a with conditioned air. Through the opened defroster opening 20, the conditioned air in the air mix chamber 17c is led to the defroster air blowing openings and blown to the inner surface of the windshield to defrost the same.

As is described hereinabove, in the second embodiment, the spaces "S" which are inevitably provided by the casing 12 are effectively used for compactly forming the ducts 24 and 28, which makes the heater/cooler unit 200 compact in size.

## Claims

1. Heater/cooler unit of an automotive air conditioning system, comprising:
a casing (12) having air inlet and outlet openings (19, 20, 21, 22) which are connected through an air flow passage (P) defined by said casing (12), an evaporator (15) installed in said air flow passage (P);
a heater core (13) which is smaller in size than said evaporator (15), said heater core (13) being installed in said air flow passage (P); and
at least one duct (24) having one end connected to a downstream portion of said air flow passage (P), **characterized in that**
said casing (12) includes an enlarged portion and a reduced portion by which an enlarged part and a reduced part of said air flow passage (P) are defined respectively, said casing (12) thus having a concave contour defined by said reduced portion thereof, said evaporator (15) is installed in said enlarged part of said air flow passage (P), said heater core (13) is installed in said reduced part of said air flow passage (P), and said duct (24) is snugly extending along said concave contour of said casing (12).

2. Heater/cooler unit according to claim 1, **characterized in that** two spaced ducts (24) extend along said concave contour of said casing (12), each duct (24) having one end connected to a downstream portion of said air flow passage (P).

3. Heater/cooler unit according to claim 1 or 2, **characterized in that** said duct (24) extends from an air mix chamber (17c) which is provided at the downstream portion of said air flow passage (P).

4. Heater/cooler unit according to claim 3, **characterized in that** said duct (24) is a foot duct through which conditioned and warmed air is led from said air mix chamber (17c) to a lower portion of a passenger room (PR) of an associated vehicle.

5. Heater/cooler unit according to at least one of the claims 1 to 4, **characterized in that** said duct (24) has a flow control door (22a) installed therein.

6. Heater/cooler unit according to at least one of the claims 1 to 5, **characterized in that** an air mix door (16) is provided in said air flow passage (P) between said evaporator (15) and said heater core (13) to control the rate between the amount of air which travels said heater core (13) before reaching said air mix chamber (17c) and the amount of air which directly reaches said air mix chamber (17c) without traveling said heater core (13).

7. Heater/cooler unit according to claim 6, **characterized in that** said air mix door (16) is shaped to match with the shape of the air flow passage (P) between said evaporator (15) and said heater core (13).

8. Heater/cooler unit according to at least one of the claims 1 to 7, **characterized in that** said casing (12) includes a body portion (12A) and a head portion (12B) which are integrally molded, said enlarged portion is an enlarged lower part of said body portion (12A) and said reduced portion is a reduced upper part of said body portion (12A), said concave contour is a smoothly curved intermediate part of said body portion (12A) thus forming at both sides of said reduced upper part concave outer surface portions

9. Heater/cooler unit of an automotive air conditioning system, comprising:
a casing (12) including an air mix chamber (17c);
an evaporator (15) installed in the casing (12);
a heater core (13) which is smaller in size than said evaporator (15), said heater core (13) being spacedly installed in the casing (12);
an air mix door (16) arranged between said evaporator (15) and said heater core (13) to control the rate between the amount of air which travels said heater core (13) before reaching said air mix chamber (17c) and the amount of air which directly reaches said air mix chamber (17c) without traveling said heater core (13); and
ducts (24) having one end connected to said air mix chamber (17c), **characterized in that** said casing (12) includes a body portion (12A) and a head portion (12B) which are integrally molded, said body portion (12A) includes a center body part having a reversed T-shaped cross section and two thinner side body parts (28) attached to said center body part with partition walls (25) interposed therebetween, said center body part and said thinner side body parts (28) having respective upstream ends connected as well as respective downstream ends connected, said casing (12) forming at both sides of said center body part outer surface portions thereof which extend along said thinner side body parts (28), said head portion (12B) defining therein said air mix chamber (17c) which is communicated with both the downstream ends of said center body part and said thinner side body parts (28);
said evaporator (15) is installed in an enlarged lower part of said center body part of said body portion (12A);
said heater core (13) is spacedly installed in a reduced upper part of said center body part;
two of said ducts (24) are received on and extending along said outer surface portions of said casing (12).

10. Heater/cooler unit as according to claim 9, **characterized in that** each duct (24) is provided at an upstream portion thereof with a flow control door (22a).

11. Heater/cooler unit according to claim 9 or 10, **characterized in that** said ducts (24) and said thinner side body parts (28) extend in parallel along the outer surface of said reduced upper part of said center body part of said body portion (12A).

## Patentansprüche

1. Heiz- / Kühlungseinheit einer Kraftfahrzeug- Klimaanlage, mit:
einem Gehäuse (12), das Lufteinlaß- und -auslassöffnungen (19, 20, 21, 22) hat, die durch einen durch das Gehäuse (12) bestimmten Luftströmungskanal (P) verbunden sind, einem in dem Luftströmungskanal (P) installierten Verdampfer (15); einem Heizerkem (13), der in der Größe kleiner als der Verdampfer (15) ist, wobei der Heizerkem (13) in dem Luftströmungskanal (P) installiert ist; und zumindest einen Kanal (24), der ein mit dem stromabwärtigen Abschnitt des Luftströmungskanales (P) verbundenes Ende hat, **dadurch gekennzeichnet, dass**
das Gehäuse (12) einen vergrößerten Abschnitt und einen verkleinerten Abschnitt enthält, durch den jeweils ein vergrößerter Teil und ein verkleinerter Teil des Luftströmungskanales (P) gebildet ist, wobei das Gehäuse (12) somit eine konkave Kontur hat, der durch den verkleinerten Abschnitt desselben gebildet ist, der Verdampfer (15) in dem vergrößerten Teil des Luftströmungskanales (P) installierte ist, der Heizerkern (13) in dem verkleinerten Teil des Luftströmungskanales (P) installiert ist und der Kanal (24) sich eng entlang des konkaven Umrisses des Gehäuses (12) erstreckt.

2. Heiz- / Kühlungseinheit nach Anspruch 1, **dadurch gekennzeichnet, dass** sich zwei beabstandete Kanäle (24) entlang des konkaven Umrisses des Gehäuses (12) erstrecken, wobei jeder Kanal (24) ein mit einem stromabwärtigen Abschnitt des Luftströmungskanales (P) verbundenes Ende hat.

3. Heiz- / Kühlungseinheit nach Anspruch 1 oder 2, **dadurch gekennzeichnet, dass** sich der Kanal (24) von einer Luftmischkammer (17c) erstreckt, die an dem stromabwärtigen Abschnitt des Luftströmungskanales (P) vorgesehen ist.

4. Heiz- / Kühlungseinheit nach Anspruch 3, **dadurch gekennzeichnet, dass** der Kanal (24) ein Fußkanal ist, durch den klimatisierte und erwärmte Luft von der Luftmischkammer (17c) zu einem unteren Abschnitt eines Fahrgastraumes (PR) eines zugehörigen Fahrzeuges geleitet wird.

5. Heiz- / Kühlungseinheit nach zumindest einem der Ansprüche 1 bis 4, **dadurch gekennzeichnet, dass** der Kanal (24) eine darin installierte Strömungssteuerklappe (22a) hat.

6. Heiz- / Kühlungseinheit nach zumindest einem der Ansprüche 1 bis 5, **dadurch gekennzeichnet, dass** eine Luftmischklappe (16) in dem Luftströmungskanal (P) zwischen dem Verdampfer (15) und dem Heizerkern (13) vorgesehen ist, um die Rate zwischen der Luftmenge, die durch den Heizerkern (13) vor dem Erreichen der Luftmischkammmer (17c) hindurchgeht, und der Luftmenge, die die Luftmischkammer (17c) direkt erreicht, ohne durch den Heizerkern (13) hindurchzugehen, zu steuern.

7. Heiz- / Kühlungseinheit nach Anspruch 6, **dadurch gekennzeichnet, dass** die Luftmischklappe (16) so geformt ist, dass sie mit der Form des Luftströmungskanales (P) zwischen dem Verdampfer (15) und dem Heizerkem (13) übereinstimmt.

8. Heiz- / Kühlungseinheit nach zumindest einem der Ansprüche 1 bis 7, **dadurch gekennzeichnet, dass** das Gehäuse (12) einen Körperabschnitt (12A) und einen Kopfabschnitt (12B) enthält, die einstückig geformt sind, wobei der vergrößerte Abschnitt ein vergrößerter unterer Teil des Körperabschnittes (12A) ist und der verkleinerte Abschnitt ein verkleinerter oberer Teil des Körperabschnittes (12A) ist, wobei die konkave Kontur ein glatt- gekrümmter Zwischenteil des Körperabschnittes (12A) ist, der somit an beiden Seiten des verminderten oberen Teiles einen konkaven Außenoberflächenabschnitt bildet.

9. Heiz- / Kühlungseinheit einer Kraftfahrzeug- Klimaanlage, mit:
einem Gehäuse (12), das eine Luftmischkammer (17c) enthält;
einem in dem Gehäuse (12) installierten Verdampfer (15);
einem Heizerkern (13), der in der Größe kleiner als der Verdampfer (15) ist, wobei der Heizerkern (13) in dem Gehäuse (12) beabstandet installiert ist;
eine Luftmischklappe (16), angeordnet zwischen dem Verdampfer (15) und dem Heizerkern (13), um die Rate zwischen der Luftmenge , die durch den Heizerkern (13) vor dem Erreichen der Luftmischkammer (17c) hindurchgeht, und der Luftmenge, die die Luftmischkammer (17c) direkt erreicht, ohne durch den Heizerkern (13) hindurchzugehen, zu steuern; und
Kanälen (24), die ein mit der Luftmischkammer (17c) verbundenes Ende haben,
**dadurch gekennzeichnet, dass** das Gehäuse (12) einen Körperabschnitt (12A) und einen Kopfabschnitt (12B) enthält, die einstückig geformt sind, wobei der Körperabschnitt (12A) einen Mittelkörperteil enthält, der einen umgekehrt T- förmigen Querschnitt und zwei dünnere Seitenkörperteile (28) hat, die mit dem Mittelkörperteil durch dazwischen eingebrachte Trennwände (25) verbunden sind, wobei das Mittelkörperteil und die dünneren Seitenkörperteile (28) jeweils verbundene stromaufwärtige Enden sowie jeweils verbundene stromabwärtige Enden haben, wobei das Gehäuse (12) auf beiden Seiten des Mittelkörperteil Außenoberflächenabschnitte bildet, die sich entlang der dünneren Seitenkörperteile (28) erstrecken, wobei in dem Kopfabschnitt (12B) die Luftmischkammer (17c) gebildet ist, die sowohl mit den stromabwärtigen Enden des Mittelkörperteiles, als auch den dünneren Seitenkörperteilen (28) verbunden ist;
der Verdampfer (15) in einem vergrößerten unterer Teil des Mittelkörperteiles des Körperabschnittes (12A) installiert ist;
der Heizerkern (13) in einem verkleinerten oberen Teil des Mittelkörperteiles räumlich beabstandet installiert ist;
zwei der Kanäle (24) auf den Außenoberflächenabschnitten des Gehäuses (12) aufgenommen sind und sich entlang derselben erstrecken.

10. Heiz- / Kühlungseinheit nach Anspruch 9, **dadurch gekennzeichnet, dass** der Kanal (24) an seinem stromaufwärtigen Abschnitt mit einer Strömungssteuerungsklappe (22a) versehen ist.

11. Heiz- / Kühlungseinheit nach Anspruch 9 oder 10, **dadurch gekennzeichnet, dass** sich die Kanäle (24) und die dünneren Seitenkörperteile (28) sich entlang der Außenoberfläche des reduzierten oberen Teiles des Mittelkörperteiles des Körperabschnittes (12A) parallel erstrecken.

## Revendications

1. Unité de chauffage/refroidissement d'un système de conditionnement d'air de véhicule, comprenant :
un boîtier (12) présentant des ouvertures d'entrée et de sortie d'air (19, 20, 21, 22) qui sont reliées par un passage d'écoulement d'air (P) défini par ledit boîtier (12), un évaporateur (15) installé dans ledit passage d'écoulement d'air (P) ;
un noyau de chauffage (13) dont la taille est plus petite que ledit évaporateur (15), ledit noyau de chauffage (13) étant installé dans ledit passage d'écoulement d'air (P) ; et
au moins un conduit (24) présentant une extrémité reliée à une portion aval dudit passage d'écoulement d'air (P), **caractérisée en ce que** ledit boîtier (12) comporte une portion élargie et une portion réduite par lesquelles une partie élargie et une partie réduite dudit passage d'écoulement d'air sont définies, respectivement, ledit boîtier (12) présentant ainsi un contour concave défini par ladite portion réduite de celui-ci, ledit évaporateur (15) est installé dans ladite partie agrandie dudit passage d'écoulement d'air (P), ledit noyau de chauffage (13) est installé dans ladite partie réduite dudit passage d'écoulement d'air (P), et ledit conduit (24) s'étend d'une manière bien ajustée le long dudit contour concave dudit boîtier (10).

2. Unité de chauffage/refroidissement selon la revendication 1, **caractérisée en ce que** deux conduits espacés (24) s'étendent le long dudit contour concave dudit boîtier (12), chaque conduit (24) ayant une extrémité reliée à une portion aval dudit passage d'écoulement d'air (P) .

3. Unité de chauffage/refroidissement selon la revendication 1 ou 2, **caractérisée en ce que** ledit conduit (24) s'étend à partir d'une chambre de mélange d'air (17c) qui est réalisée à la portion aval dudit passage d'écoulement d'air (P).

4. Unité de chauffage/refroidissement selon la revendication 3, **caractérisée en ce que** ledit conduit (24) est un conduit à proximité des pieds à travers lequel de l'air conditionné et chauffé est mené de ladite chambre de mélange d'air (17c) à une portion inférieure d'un compartiment des passagers (PR) d'un véhicule associé.

5. Unité de chauffage/refroidissement selon au moins l'une des revendications 1 à 4, **caractérisée en ce que** ledit conduit (24) présente une porte de commande d'écoulement (22a) installée dans celui-ci.

6. Unité de chauffage/refroidissement selon au moins l'une des revendications 1 à 5, **caractérisée en ce qu'**une porte de mélange d'air (16) est réalisée dans ledit passage d'écoulement d'air (P) entre ledit évaporateur (15) et ledit noyau de chauffage (13) pour commander le débit entre la quantité d'air qui passe devant ledit noyau de chauffage (13) avant d'atteindre ladite chambre de mélange d'air (17c) et la quantité d'air qui atteint directement ladite chambre de mélange d'air (17c) sans passer par ledit noyau de chauffage (13).

7. Unité de chauffage/refroidissement selon la revendication 6, **caractérisée en ce que** ladite porte de mélange d'air (16) est configurée pour correspondre à la forme du passage d'écoulement d'air (P) entre ledit évaporateur (15) et ledit noyau de chauffage (13).

8. Unité de chauffage/refroidissement selon au moins l'une des revendications 1 à 7, **caractérisée en ce que** ledit boîtier (12) comporte une portion de corps (12A) et une portion de tête (12B) qui sont moulées intégralement, ladite portion élargie est une partie inférieure élargie de ladite portion de corps (12A), et ladite portion réduite est une partie supérieure réduite de ladite portion de corps (12A), ladite contour concave est une partie intermédiaire, courbée en douceur de ladite portion de corps (12A) formant ainsi aux deux côtés de ladite partie supérieure réduite des portions de surface extérieures concaves.

9. Unité de chauffage/refroidissement d'un système de conditionnement d'air de véhicule, comprenant :
un boîtier (12) comportant une chambre de mélange d'air (17c) ;
un évaporateur (15) installé dans la boîtier (12) ;
un noyau de chauffage (13) dont la taille est plus petite que ledit évaporateur (15) ;
ledit noyau de chauffage (13) étant installé d'une manière espacée dans le boîtier (12) ;
. une porte de mélange d'air (16) agencée entre ledit évaporateur (15) et ledit noyau de chauffage (13) pour commander le débit entre la quantité d'air qui passe devant ledit noyau de chauffage (13) avant d'atteindre ladite chambre de mélange d'air (17c) et la quantité d'air qui atteint directement ladite chambre de mélange d'air (17c) sans passer devant ledit noyau de chauffage (13) ; et
des conduits (24) ayant une extrémité reliée à ladite chambre de mélange d'air (17c),
**caractérisée en ce que** ledit boîtier (12) comporte une portion de corps (12A) et une portion de tête (12B) qui sont moulées intégralement, ladite portion de corps (12A) comporte une partie de corps centrale d'une section transversale en forme de T inversé et deux parties de corps latérales plus minces (28) fixées à ladite partie de corps centrale, avec des parois de séparation (25) interposées entre celles-ci, ladite partie de corps centrale et lesdites parties de corps latérales plus minces (28) présentant des extrémités amont respectives reliées ainsi que des extrémités aval respectives reliées, ledit boîtier (12) formant aux deux côtés de ladite partie de corps centrale des portions de surface extérieures de celles-ci qui s'étendent le long desdites parties des corps latérales plus minces (28), ladite portion de tête (12B) définissant à l'intérieur ladite chambre de mélange d'air (17c) qui est en communication avec les deux extrémités aval de ladite partie de corps centrale et lesdites parties de corps latérales plus minces (28) ;
ledit évaporateur (15) est installé dans une partie inférieure agrandie de ladite partie de corps centrale de ladite portion de corps (12A) ;
ledit noyau de chauffage (13) est installé d'une manière espacée dans une partie supérieure réduite de ladite partie de corps centrale ;
deux desdits conduits (24) sont reçus sur et s'étendent le long desdites portions de surface extérieures dudit boîtier (12).

10. Unité de chauffage/refroidissement selon la revendication 9, **caractérisée en ce que** chaque conduit (24) présente à sa portion amont une porte de commande d'écoulement (22a).

11. Unité de chauffage/refroidissement selon la revendication 9 ou 10, **caractérisée en ce que** lesdits conduits (24) et lesdites parties de corps latérales plus minces (28) s'étendent parallèlement le long de la surface extérieure de ladite partie supérieure réduite de ladite partie de corps centrale de ladite portion de corps (12A).
